# EUROPEAN PATENT APPLICATION

(11) **EP 3 151 513 A1**
(43) Date of publication of application: **05.04.2017**
(21) Application number: 14896286.3
(22) Date of filing: 04.07.2014
(51) Int. Cl.: H04L 29/08

(54) **SERVICE ELASTIC METHOD AND DEVICE IN CLOUD COMPUTING**

(71) Applicant: Huawei Technologies Co., Ltd., Longgang District Shenzhen, Guangdong 518129 (CN)
(72) Inventor: QIN, Jin, Shenzhen Guangdong 518129 (CN); XIE, Junan, Shenzhen Guangdong 518129 (CN); ZHANG, Yi, Shenzhen Guangdong 518129 (CN); ZHU, Jie, Shenzhen Guangdong 518129 (CN)
(74) Representative: Pfenning, Meinig & Partner mbB
(86) International application number: PCT/CN2014/081617
(87) International publication number: WO 2016/000244

(57) **Abstract**

A service-based elastic method in a cloud environment includes: detecting, by a cloud platform, an elastic event that occurs in running of a service; determining, by the cloud platform, a node that needs to be elastic and corresponds to the elastic event; determining, by the cloud platform according to an identifier of the node that needs to be elastic, a service topology diagram of the service, and an elastic method identifier of the service in a cloud service archive, a connection relationship that needs to be established, where the connection relationship includes a connection relationship between newly added node instances and a connection relationship between a newly added node instance and an existing node instance; and creating and running, by the cloud platform, the newly added node instance according to information of the node that needs to be elastic in the cloud service archive and the connection relationship. By means of the method in the present invention, running of a service can be optimized more effectively.

## Description

### TECHNICAL FIELD

The present invention relates to the field of computers, and specifically, to technologies in the field of cloud computing.

### BACKGROUND

Cloud computing is a computing mode, in which computing tasks are distributed in a resource pool formed of a large quantity of computers, so that various application systems can obtain computing power, storage space and information services according to requirements. A network that provides resources is referred to as a "cloud". For a user, resources in a "cloud" seem to be infinitely expandable, and can be obtained readily, used on demand, expanded readily, and charged per use.

Elasticity (elastics) is one of main characteristics of cloud computing. Elastics of cloud computing refers to that a cloud operating environment (cloud environment for short) provided by a cloud service provider may dynamically divide or release different physical and virtual resources according to requirements of consumers. When a requirement increases, available resources may be added to perform matching, so as to implement rapid elastic expansion of resources; and if the resources are no longer used by a user, the resources may be released. This capability provided by cloud computing to customers is infinite, which implements use expandability of IT resources.

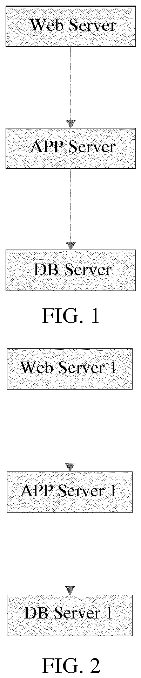

In cloud computing, for a service, different components may be combined to implement a specific function. The different components are referred to as nodes, and a directed graph that shows a connection relationship between the different components is referred to as a service logic topology diagram, which is referred to as a service topology diagram for short, as shown in FIG. 1. A node (Node) is a logical concept, which refers to a component in an application topology diagram. A node template is used to describe a node, and specifies a type of the node, a method and a product that are needed for deployment and life cycle management of the node, and other attributes of the node. The deployment of the node needs to be performed according to the node template. A node instance is a node entity that actually runs on a machine, for example, a group of processes, after the node template is deployed. The node template and the node instance may be collectively referred to as a node. A node specifically refers to a node template before the node is deployed to form an entity, and a node is referred to as a node instance after the node is deployed to form an entity.

Establishment of a connection relationship mainly refers to that information (for example, an IP address and a port number) of a target node instance is added to a source node instance, and information (for example, an IP address and a port number) of the source node instance is added to the target node instance, so that in a running process of a service, the source node knows which node the source node is to send a request to, and the target node knows which node sends a request that the target node may receive. As shown in FIG. 1, a service consists of three components (nodes), where a Web Server (Web server) and an App Server (application server) have a connection relationship, and the App Server also has a connection relationship with a DB Server (database server).

Deployment and elastics of any service need to be implemented based on a service topology diagram. First, node instances are created according to a node template node template, and a connection relationship between node instances is established according to the service topology diagram, and then a specific service is deployed. An elastic process of a service is also that a node instance is created according to a node template that needs to be elastic, and then the new node instance is added to an existing node instance according to a connection relationship of a service topology diagram. In an example, according to a topological structure shown in FIG. 1, a specific service may be deployed in a cloud environment. After receiving a service quest, a node instance Web Server 1 sends a connection request to an App Server 1 that has a connection relationship with the Web Server 1, and the App Server 1 sends a connection request to a DB Server 1 that has a connection relationship with the App Server 1 to perform operations related to a data service. Refer to FIG. 2 for details.

With running of the service, an elastic operation needs to be performed on the node instance of the service. However, at present, in the prior art, service elastics is full connection elastics, that is, for a scaled-out new node instance, a connection relationship with all node instances corresponding to a node template having a connection relationship with a node template corresponding to the new node instance is established according to a service topology diagram.

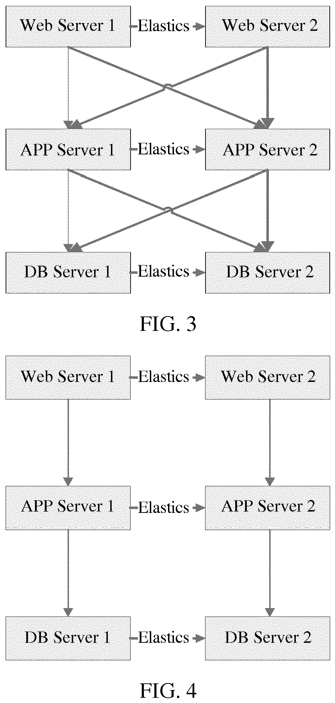

Referring to FIG. 3, FIG. 3 is a schematic diagram of full connection elastics. Three node instances that need to be newly scaled out for a service are a Web Server 2, an App Server 2, and a DB Server 2. According to a topology diagram shown in FIG. 1, a node template Web Server needs to be connected to a node template App Server, so that the node instance Web Server 1 needs to be connected to the scaled-out new node instance App Server 2, and the new node instance Web Server 2 needs to be connected to the original node instance App Server 1 and the new node instance App Server 2. Similarly, the node instance App Server 1 is connected to the node instance DB Server 2, and the node instance App Server 2 is connected to the node instance DB Server 1 and the node instance DB Server 2.

In a process of implementing the present invention, the inventor finds that an existing technical solution is only for full elastics of a node, so that only full connection elastics of a service can be implemented, and an elastic manner of the service is inflexible.

### SUMMARY

The present invention provides a service elastic method in a cloud computing environment, so that for a scaled-out new node instance in a running process of a service, a connection relationship with some of new node instances corresponding to a node template having a connection relationship with the new node instance in a service topology diagram can be established, thereby more effectively optimizing running of the service.

An embodiment of the present invention provides a service-based elastic method in a cloud environment, where the method includes:
detecting, by a cloud platform, an elastic event that occurs in running of a service;
determining, by the cloud platform, an identifier of a node that needs to be elastic and corresponds to the elastic event;
determining, by the cloud platform according to the identifier of the node that needs to be elastic, a service topology diagram of the service, and an elastic method identifier of the service in a cloud service archive, a connection relationship that needs to be established, where the connection relationship includes a connection relationship between newly added node instances and a connection relationship between a newly added node instance and an existing node instance; and
creating and running, by the cloud platform, the newly added node instance according to information of the node that needs to be elastic in the cloud service archive and the connection relationship.

Further, the elastic method identifier of the service is full connection elastics or partial connection elastics, where
the full connection elastics refers to that a scaled-out new node instance establishes, according to the service topology diagram, a connection relationship with all node instances corresponding to a node template having a connection relationship with a node template corresponding to the new node instance; and
the partial connection elastics refers to that the scaled-out new node instance establishes, according to the service topology diagram, a connection relationship with some of node instances corresponding to a node template having a connection relationship with the node template corresponding to the new node instance.

Further, when the elastic method identifier of the service is the partial elastic connection, if all nodes of the service are scaled out, the determining a connection relationship that needs to be established is: determining that only a connection between the newly added node instances is to be established.

Further, when the elastic method identifier of the service is the partial elastic connection, if some of nodes of the service are scaled out, the determining a connection relationship that needs to be established includes: determining to establish a connection between the newly added node instances and establish a connection between some of node instances of the newly added node instances and the existing node instance; and
the creating and running, by the cloud platform, the newly added node instance according to information of the node that needs to be elastic in the cloud service archive and the connection relationship specifically includes: creating, by the cloud platform, the newly added node instance according to the information of the node that needs to be elastic in the cloud service archive, and establishing the connections between the newly added node instances according to the determined connection relationship that needs to be established; and establishing, based on the service topology diagram, a connection between the newly added node instances as a whole and the existing node instance.

An embodiment of the present invention further provides a cloud computing server, configured to execute a service-based elastic method in a cloud environment, where the cloud computing server includes a parsing and maintenance module and a control module, where
the control module is configured to: detect an elastic event that occurs in running of a service, and report the detected elastic event to the parsing and maintenance module;
the parsing and maintenance module is configured to: receive the elastic event reported by the control module; determine an identifier of a node that needs to be elastic and corresponds to the elastic event; and determine, according to the identifier of the node that needs to be elastic, a service topology diagram of the service, and an elastic method identifier of the service in a cloud service archive, a connection relationship that needs to be established, where the connection relationship includes a connection relationship between newly added node instances and a connection relationship between a newly added node instance and an existing node instance; and
the control module is further configured to: execute an elastic operation according to information of the node that needs to be elastic in the cloud service archive and the connection relationship that is determined by the parsing and maintenance module, and create and run the newly added node instance.

Further, the elastic method identifier of the service is full connection elastics or partial connection elastics, where the full connection elastics refers to that a scaled-out new node instance establishes, according to the service topology diagram, a connection relationship with all node instances corresponding to a node template having a connection relationship with a node template corresponding to the new node instance; and the partial connection elastics refers to that the scaled-out new node instance establishes, according to the service topology diagram, a connection relationship with some of node instances corresponding to a node template having a connection relationship with the node template corresponding to the new node instance.

Further, when the elastic method identifier of the service is the partial elastic connection, if all nodes of the service are scaled out, the parsing and maintenance module is further configured to: determine that only a connection between the newly added node instances needs to be established, and instruct the control module to create and run the newly added node instance according to the information of the node that needs to be elastic in the cloud service archive and the connection relationship.

Further, when the elastic method identifier of the service is the partial elastic connection, if some of nodes of the service are scaled out, the parsing and maintenance module is further configured to: determine to establish a connection between the newly added node instances; establish a connection between some of node instances of the newly added node instances and the existing node instance; instruct the control module to create the newly added node instance according to the information of the node that needs to be elastic in the cloud service archive; first establish connections between the newly added node instances according to the determined connection relationship; and then establish, based on the service topology diagram, a connection between the newly added node instances as a whole and the existing node instance.

It can be seen from the technical solutions provided by the embodiments of the present invention that in the embodiments of the present invention, an elastic method identifier of a service is set to describe related information of service elastics, so that an elastic method of the service is more flexible, and running of the service in a cloud environment is optimized more effectively.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a service topology diagram in a cloud environment;
FIG. 2 is a schematic diagram of an example of service deployment based on a service topology diagram;
FIG. 3 is a schematic diagram of an example of full elastic connection;
FIG. 4 is a schematic diagram of an example of partial elastic connection according to an embodiment of the present invention;
FIG. 5 is a flowchart of a service-based elastic method in a cloud environment according to an embodiment of the present invention;
FIG. 6 to FIG. 8 are schematic diagrams of an embodiment for implementing partial elastic connection according to an embodiment of the present invention;
FIG. 9 to FIG. 11 are schematic diagrams of an embodiment for implementing partial elastic connection according to an embodiment of the present invention;
FIG. 12 to FIG. 15 are schematic diagrams of an embodiment for implementing full elastic connection according to an embodiment of the present invention; and
FIG. 16 is schematic structural diagram of a cloud computing server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Based on existing problems in the prior art, the inventor finds that in some specific service elastic scenarios in cloud computing, only connections between newly scaled-out node instances need to be established, and connections do not need to be established between some newly scaled-out node instances and an existing node instance. For example, a service is first deployed in the United States. Using FIG. 4 as an example, a Web Server 1, an App Server 1 and a DB Server 1 are all deployed in a server in the United States. However, a system finds that many service requests come from China, and then a cloud environment automatically scales out a new node instance in a server in China. That is, a Web Server 2, an App Server 2 and a DB Server 2 that are scaled out are all deployed in the server in China. In this case, connection relationships only need to be established between the newly scaled out node instances, that is, connection relationships are established between the Web Server 2, the App Server 2, and the DB Server 2, so that a web page request from China does not need to be connected to the app server App Server 1 in the United States, and data does not need to be acquired from the database server DB Server 1 in the United States.

Based on the foregoing concept, embodiments of the present invention provide a service-based elastic method in a cloud environment, so as to implement more efficient running of a service on a cloud platform.

The cloud platform is also referred to as a cloud management platform, a cloud environment, a cloud server, and the like, and generally includes two processing modules: a controller Controller and a container Container. The container is generally responsible for parsing a cloud service archive and maintaining a service, and for the service, one node implements a specific function or different nodes are combined to implement a specific function. The Controller receives node information and relationship information of nodes from the Container, creates and maintains a node and maintains relationships between the nodes according to the received information, and may report a running condition of the nodes to the Container. Certainly, division of the foregoing functions or naming of functional entities may further have other manners, which are not limited in the embodiments of the present invention. In specific implementation, the Controller and the Container may be processors processor in a computer and execute a related instruction in a memory of the cloud platform.

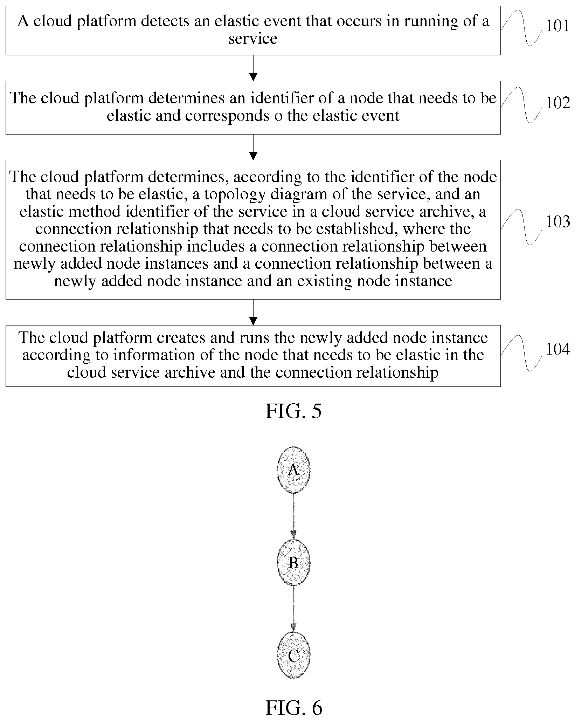

Referring to FIG. 5, FIG. 5 is a flowchart of a service-based elastic method in a cloud environment according to an embodiment of the present invention, where the method includes the following steps.

Step 101: A cloud platform detects an elastic event that occurs in running of a service.

Specifically, a Controller monitors a running condition of a node instance, and reports a corresponding monitoring parameter, for example, a quantity of currently connected users, of the node instance to a Container; and the Container determines, according to the monitoring parameter reported by the Controller and elastic information in a cloud service archive, whether an elastic event occurs, for example, determines whether the monitoring parameter reaches a threshold of triggering an elastic operation. If the monitoring parameter reaches the threshold of triggering an elastic operation, the cloud platform detects that the elastic event occurs in running of a service, where the elastic event may include that a quantity of connections of the service exceeds a preset threshold or a connection response time of the service is greater than a preset threshold.

Step 102: The cloud platform determines an identifier of a node that needs to be elastic and corresponds to the elastic event.

The cloud platform detects that the elastic event occurs in the running of the service, for example, detects that the running of a service reaches a threshold of triggering an elastic operation. The cloud platform searches for the node that needs to be elastic in a corresponding elastic policy or an elastic plan in the cloud service archive according to a trigger condition, that is, determines the identifier of the node that needs to be elastic and corresponds to the elastic event, where the identifier of the node that needs to be elastic may also be referred to as an identifier of a node that needs to be newly added.

Step 103: The cloud platform determines, according to the identifier of the node that needs to be elastic, a topology diagram of the service, and an elastic method identifier of the service in a cloud service archive, a connection relationship that needs to be established, where the connection relationship includes a connection relationship between newly added node instances and a connection relationship between a newly added node instance and an existing node instance.

The connection relationship described herein includes which node instances need to be connected and which node instances do not need to be connected.

The elastic method identifier of the service is used to identify the elastic method to be used by the service is full connection elastics or partial connection elastics, where the full connection elastics refers to that a corresponding scaled-out new node instance establishes, according to the service topology diagram, a connection relationship with all node instances corresponding to a node template having a connection relationship with a node template corresponding to the new node instance; and the partial connection elastics refers to that the corresponding scaled-out new node instance establishes, according to the service topology diagram, a connection relationship with some of node instances corresponding to a node template having a connection relationship with the node template corresponding to the new node instance.

In the prior art, there is no elastic method identifier for a node. Therefore, the elastic method for the node is implemented according to the full connection elastics. There is also no elastic method identifier for a service either. For a service, different nodes are usually combined to implement a specific function. Therefore, to implement partial connection elastics of a service, content of a cloud service archive is modified and optimized, and an identifier of an elastic method for the service is added in this embodiment of the present invention. In this way, during scaling for a service, the cloud platform may perform a corresponding operation according to an elastic method identifier.

Step 104: The cloud platform creates and runs the newly added node instance according to information of the node that needs to be elastic in the cloud service archive and the connection relationship.

Specifically, a Container sends, to a Controller, a node template Node Template corresponding to a related newly added node identifier and a connection relationship template Relationship Template corresponding to a newly added connection relationship; the Controller creates the new node instance according to information of the received node template; the Controller establishes the connection relationships between the newly added node instances according to information of the received connection relationship template.

For a case of full connection elastics, the Controller sends an instruction to the newly added node instance according to information of an elastic operation in the received node template, so that the newly added node instance executes the elastic operation corresponding to an elastic identifier (that is the elastic information of the node) in the node template. The elastic information of the node is used to indicate whether the node can be elastic, and at most how many nodes can be scaled out. The Controller establishes the connection relationship between the newly added node instance and the existing node instance according to the received connection relationship template. Finally, for the case of the full connection elastics, a scaled-out new node instance establishes, according to the service topology diagram, the connection relationship with all node instances corresponding to the node template having the connection relationship with the node template corresponding to the new node instance.

For a case of partial connection elastics, if the node that needs to be elastic of the service is determined to be partially scaled out, it may be implemented according to the following manners:

First, connections between the scaled-out node instances are established according to the service topology diagram in service deployment.

A connection relationship between only some of the new node instances and the existing node instance is then established. For example, a connection between all scaled-out node instances (there are usually two or more scaled-out node instances) as a whole and the existing node instance is established based on the service topology diagram in the service deployment.

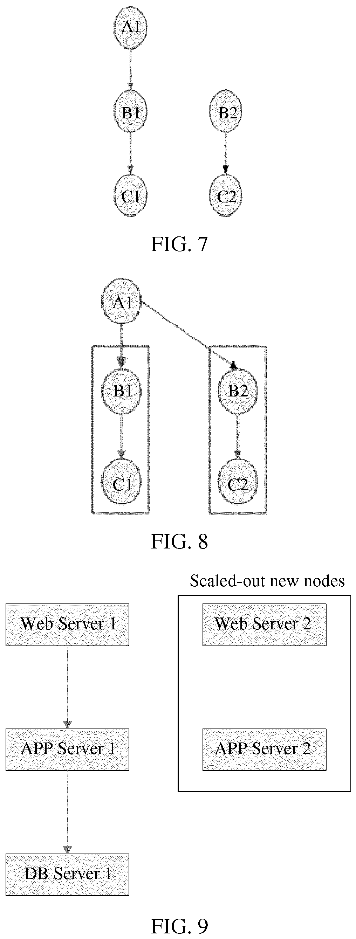

Referring to FIG. 6, FIG. 7, and FIG. 8, for a topological structure shown in FIG. 6, a source node instance of the topological structure is A1, B1, and C1, as shown in FIG. 7. New node instances B2 and C2 need to be scaled out according to a given elastic trigger policy. Because B and C have a connection relationship according to an original topology diagram 6, a connection is first established between the newly added B2 and the newly added C2, as shown in FIG. 7. In this case, B2 and C2 are seen as a whole, so that in an original topology diagram, only a node A and the node B are connected, and a connection is established between the node instance A1 and the newly added node instance B2, as shown in FIG. 8.

Certainly, for the case of the partial connection elastics, if the nodes of the service are all scaled out, only connections between the scaled-out node instances may be established. As described in FIG. 4, according to the service topology diagram in the service deployment, after the connections between the scaled-out node instances are established, the service may run in the newly added node instance, and connections between the scaled-out node instances and the existing node instance no longer need to be established.

According to the method in the embodiment of the present invention, a cloud platform detects an elastic event, determines a node that needs to be elastic, and determines, by means of a newly added service elastic method identifier, whether an elastic method of the service is full elastic connection or partial elastic connection, and further determines a connection relationship between newly added node instances and a connection relationship between a newly added node instance and an existing node instance, so that running of the service may be optimized more effectively, different elastic manners are provided according to different scenarios, and elastics of the service is more flexible. In a case in which the elastic method of the service is determined to be the partial elastic connection, automatically partial elastics of the service can be implemented, complexity of a network connection can be reduced, and a response speed can be improved.

Specifically, for a technical solution of partial elastic connection, it may be implemented that for each service request, a load balancing server does not need to select a node instance from which a service needs to be requested, and a node instance that is to be connected only needs to be determined in the process in which a scaled-out node is added to the service. However, as shown in FIG. 3, in a manner of full elastic connection, after a web request is sent to a Web Server 1, the Web Server 1 has to determine that whether this request needs to be submitted to an App Server 1 for processing, or needs to be submitted to an App Server 2 for processing, which increases processing complexity. However, in a case of the partial elastic connection, as shown in FIG. 4, the request sent by the web Server 1 is directly sent to the App Server 1 for processing, and it does not need to be determined each time whether to select the App Server 1 or the App Server 2, thereby improving efficiency of service processing.

In addition, in the case of partial connection elastics, a database server does not need to perform real-time synchronization, thereby reducing a system loss. Similarly, referring to FIG. 3, in the full elastic connection, because the App Server 1 may send a request to a DB Server 1 or a DB Server 2, the DB Server 1 and the DB Server 2 have to keep data synchronization, and requested data has to be simultaneously saved in the DB Server 1 and the DB Server 2. However, as shown in FIG. 4, in the partial elastic connection, the App Server 1 only sends a request to the DB Server 1, so that the related data only needs to be saved in the DB Server 1.

To implement partial connection elastics of a service, content of a cloud service archive uploaded by a developer needs to be modified, and a description of an elastic method of a connection of a service is added. The cloud service archive (CSAR, Cloud Service ARchive) includes content of the service and a connection relationship between service nodes. By means of the cloud service archive, a service may be deployed in a corresponding cloud environment. In a cloud service archive in the prior art, the description of the elastic method of the service is not included. In a case of default node elastics, the node elastics is directly added to the service in a full elastic manner. With reference to the method embodiment described above, in the following embodiment, a cloud service archive of the TOSCA (Topology and Orchestration Specification for Cloud Applications, Topology and Orchestration Specification for Cloud Applications) standards is used as an example to describe some modifications that need to be made related to the cloud service archive during implementation of the foregoing method of the embodiment of the present invention.

BoundaryDefinations is a field defined in the TOSCA standards. In a service template Service Template field, the BoundaryDefinations is used to define some characteristics of a service Service, for example, some constraints (Constraints) of the service, capabilities (Capabilities) provided by the service, and requirements (Requirements) of using the service.

According to the method in this embodiment of the present invention, a new element <ElasticServices> is added to the Boundary Definations of a Service Template in a cloud service archive, which is used to describe related information of service elastics and includes an elastic method of the service. In <ElasticServices>, newly added fields include Elastic ID, TriggerEvent, ElasticMethod, Elastic Nodes, and the like, and a format may be shown as below:

```
           <ElasticService>
             <ElasticService>
                <Elastic ID></Elastic ID>
                <TriggerEvent>< /TriggerEvent>
                <Elastic Nodes>
                    <node>
                        <nodeID></nodeID>
                    <node>
                </Elastic Nodes>
                <ElasticMethod></ElasticMethod>
             <ElasticService>
           <ElasticService>
```

Meanings of the fields are described below:
<ElatsictMethod>: An elastic method. The field is used to identify whether full connection elastics or partial connection elastics is to be used by the service. Definitions of the full connection elastics and the partial connection elastics are described in the foregoing embodiment, and details are no longer described herein again.
<ElasticID>: An elastic ID. The field is used to distinguish a different elastic operation. For the service, different elastic operations may be used according to different service running scenarios, so as to better perform scaling for an existing service.
<TriggerEvent>: An elastic event or a trigger event. The field is used to describe an event that triggers elastics. Generally, when a monitoring parameter satisfies a threshold, such elastics is triggered.
<Elastic Nodes>: An elastic node. The field is a node template identifier corresponding to a new node instance that needs to be scaled out, and may include IDs of node templates of multiple nodes.

Accordingly, because an elastic operation identifier "Elastic" that has a semantic meaning in a node template Node Template is used to indicate an elastic operation of a node, a field <Elastic ID> may be added in an Operation corresponding to the node. The field <Elastic ID> is used to identify which elastic condition the elastic operation is applicable to, and a format of the field is shown as follows:

```
           <Operation name="Elastic">
                <Elastic ID></Elastic ID>
                <InputParameters></InputParameters>
                <OutParameters></OutParameters>
           </Operation>
```

Because there may be multiple ElasticIDs that respectively correspond to different scenarios or policies, it also indicates that one node may and also can have multiple elastic operations. An embodiment is used as an example for detailed description below.

An actual example is used below to describe an embodiment of a service-based elastic method in a cloud environment according to the method of this embodiment of the present invention after a description of an elastic method of a connection of a service is added according to a modified cloud service archive.

Assuming that a service is deployed in the cloud environment, and a service topology diagram of the service is shown in FIG. 1, and a deployed application instance of the service is shown in FIG. 2. In this case, related information of service elastic in a cloud service archive is shown as follows:

```
           <ElasticService>
             <ElasticService>
                <Elastic ID> Scenario 1</Elastic ID>
                <TriggerEvent> connectnum>1000 < / TriggerEvent >
                <Elastic Nodes>
                   <node>
                        <nodeID>web server</nodeID>
                        <nodeID>App Server</nodeID>
                   <node>
                </Elastic Nodes>
                <ElasticMethod>partial-elastic</ElasticMethod>
             <ElasticService>
           <ElasticService>
           <ElasticService>
             <ElasticService>
                <Elastic ID> Scenario 2</Elastic ID>
                <TriggerEvent > latency> 1000ms < / TriggerEvent >
                <Elastic Nodes>
                   <node>
                        <nodeID>web server</nodeID>
                        <nodeID>App Server</nodeID>
                   <node>
                </Elastic Nodes>
                <ElasticMethod>full elastic</ElasticMethod>
             <ElasticService>
           <ElasticService>
```

According to the foregoing information, when a Container finds that a quantity of connections connectnum of a service is greater than 1000, an elastic policy of a scenario 1 is triggered, and when a latency latency is greater than 1000 ms, an elastic policy of a scenario 2 is triggered. Although both the two elastic policies are to perform scaling for an App Server and a Web Server, a partial elastic (partial-elastic) connection is used in the scenario 1, and a full elastic (full elastic) connection is used in the scenario 2.

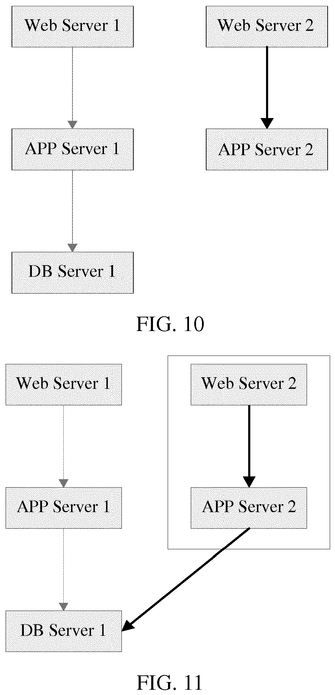

A specific elastic procedure is as below: the Controller in the cloud environment monitors a running condition of a service, and reports related parameters (including a quantity of connections connectnum and a latency latency) to the Container in real time. If the Container finds that the quantity of the connections is greater than 1000 at this time, an elastic policy 1, that is, a Scenario 1, is triggered. The Container searches for elastic information in the cloud service archive, and finds that an identifier of a node that needs to be newly added is a Web Server and an App Server, and finds a Relationship Template having a connection relationship with the identifier of the node according to the identifier of the newly added node. Subsequently, the Container sends, to the Controller, an instruction of creating the nodes a Web Server and an App Server, and sends. to the controller, a node template Node Template that corresponds to the Web Server and the App Server, and a connection relationship template Relationship Template related to the Web Server and the App Server, and the Controller creates new node instances: a Web server 2 and an App Server 2 according to received node template Node Template information, as shown in FIG. 9. Because the elastic method of the service is the partial elastic pari-elastic connection, the Container sends the instruction to the Controller, and creates a connection relationship between the Web Server 2 and the App Server 2 according to the sent Relationship Template. As shown in FIG. 10, when the connection relationship is established, the Controller executes a node elastic operation in the Node Template of the Web Server and the App Server. When execution of the node elastic operation is completed, the Controller establishes a connection between the Web Server 2 and the App Server 2 and an existing node instance DB Server 1 according to the received Relationship Template, as shown in FIG. 11.

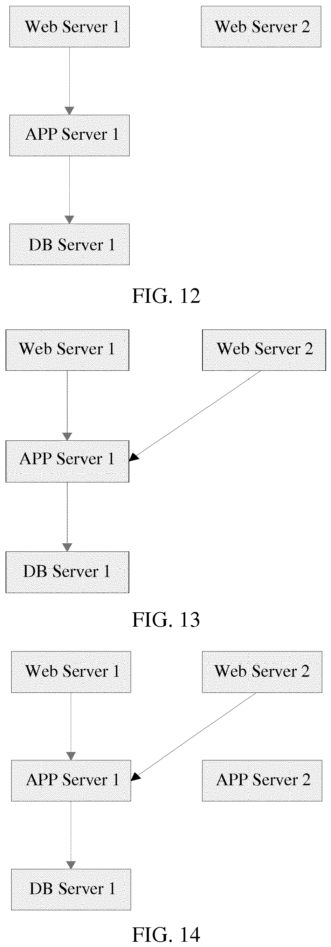

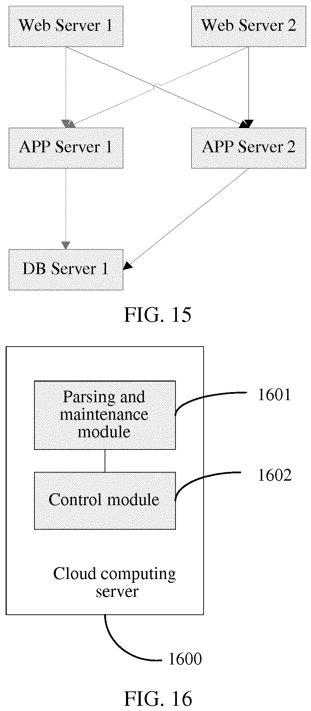

If the Container finds that the latency parameter reported by the Controller is greater than 1000 ms, an elastic policy 2, that is, a Scenario 2, is triggered. In this case, a full elastic connection manner full elastic is used. A specific procedure is: The Container sends, to the controller, an instruction of creating a node instance Web Server 2, and sends, to the controller, the node template of the web server and the relationship template having a connection relationship with the Web Server. The Controller creates the new node instance Web server 2 according to the received Node Template information, and executes an elastic operation corresponding to the Node Template of the web server, as shown in FIG. 12. Later, the node Web Server 2 creates a connection relationship with the node instance App Server 1 according to the received Relationship Template, as shown in FIG. 13. After the Web Server 2 and the App Server 1 establish the connection relationship, the Container sends, to the Controller, the instruction of creating the node instance App Server 2, and sends, to the controller, the Node Template of the App Server and information of the Relationship Template that has a connection relationship with the App Server. The Controller creates the App Server 2 according to the received information, and executes a corresponding elastic operation in the node template, as shown in FIG. 14, and then establishes connections between node instances according to the received relationship template, where the connections include a connection between the Web Server 2 and the App Server 2, a connection between the Web Server 1 and the App Server 2, and a connection between the App Server 2 and the DB Server 1, as shown in FIG. 15.

According to the method of the embodiment of the present invention, a cloud service archive is modified, a description and a definition of service elastics are added, and it may be implemented that for different elastic events and different nodes, different elastic policies are configured, and different corresponding service elastic methods are used, thereby optimizing flexibility of service elastics in cloud computing; and for a scaled-out new node instance in a running process of a service, a connection relationship can be established with some node instances corresponding to a node template having a connection relationship with a service topology diagram, thereby more effectively optimizing running of the service.

An embodiment of the present invention further provides a cloud computing server 1600, configured to implement the service-based elastic method in a cloud environment in the foregoing embodiment. As described in FIG. 16, the cloud computing server includes a parsing and maintenance module 1601 and a control module 1602 that may respectively correspond to a Container and a Controller in the TOSCA standard specification.

The control module 1602 is configured to: detect an elastic event that occurs in running of a service, and report the detected elastic event to the parsing and maintenance module 1601.

The elastic event may include that a quantity of connections of the service exceeds a preset threshold or a connection response time of the service is greater than a preset threshold.

The parsing and maintenance module 1601 is configured to: receive the elastic event reported by the control module; determine an identifier of a node that needs to be elastic and corresponds to the elastic event; and determine, according to the identifier of the node that needs to be elastic, a service topology diagram of the service, and an elastic method identifier of the service in a cloud service archive, a connection relationship that needs to be established, where the connection relationship includes a connection relationship between newly added node instances and a connection relationship between a newly added node instance and an existing node instance.

The control module 1602 is further configured to: execute an elastic operation, and create and run the newly added node instance according to information of the node that needs to be elastic in the cloud service archive and the connection relationship determined by the parsing and maintenance module 1601.

The elastic method identifier of the service is full connection elastics or partial connection elastics, where the full connection elastics refers to that a scaled-out new node instance establishes, according to the service topology diagram, a connection relationship with all node instances corresponding to a node template having a connection relationship with a node template corresponding to the new node instance; and the partial connection elastics refers to that the scaled-out new node instance establishes, according to the service topology diagram, a connection relationship with some of node instances corresponding to a node template having a connection relationship with the node template corresponding to the new node instance.

The parsing and maintenance module 1601 is further configured to: when the elastic method identifier of the service is the partial elastic connection, if all nodes of the service are scaled out, determine that only a connection between the newly added node instances needs to be established, and instruct the control module 1602 to create and run the newly added node instance according to a node template that needs to be elastic in the cloud service archive and the connection relationship.

The parsing and maintenance module 1601 may be further configured to: when the elastic method identifier of the service is the partial elastic connection, if some of nodes of the service are scaled out, determine to establish a connection between the newly added node instances; establish a connection between the newly added node instances and the existing node instance; instruct the control module 1602 to create the newly added node instance according to the information of the node that needs to be elastic in the cloud service archive; first establish connections between the newly added node instances; and then establish, based on the service topology diagram, a connection between the newly added node instances as a whole and the existing node instance.

The cloud computing server 1600 provided by the embodiment of the present invention detects an elastic event, determines a node that needs to be elastic, and determines, by means of a newly added service elastic method identifier, whether an elastic method of the service is full elastic or partial elastic, and further determines a connection relationship between newly added node instances and a connection relationship between a newly added node instance and an existing node instance, so that running of the service may be optimized more effectively. In a case in which the elastic method of the service is determined to be a partial elastic connection, by using the cloud computing server provided by the embodiment of the present invention, complexity of a network connection can be reduced, and a response speed can be improved.

Because content such as information interaction and execution processes between various modules in the foregoing cloud computing server 1600 is based on a same concept with the method embodiment of the present invention. For specific content, refer to a description in the method embodiment of the present invention, which is not described herein again.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (ROM: Read-Only Memory), or a random access memory (RAM: Random Access Memory).

Specific examples are used in this specification to describe the principle and implementation manners of the present invention. The descriptions of the foregoing embodiments are merely intended to help understand the method and idea of the present invention. In addition, with respect to the implementation manners and the application scope, modifications may be made by a person of ordinary skill in the art according to the idea of the present invention. Therefore, this specification shall not be construed as a limitation on the present invention.

## Claims

1. A service-based elastic method in a cloud environment, wherein the method comprises:
detecting, by a cloud platform, an elastic event that occurs in running of a service;
determining, by the cloud platform, an identifier of a node that needs to be elastic and corresponds to the elastic event;
determining, by the cloud platform according to the identifier of the node that needs to be elastic, a service topology diagram of the service, and an elastic method identifier of the service in a cloud service archive, a connection relationship that needs to be established, wherein the connection relationship comprises a connection relationship between newly added node instances and a connection relationship between a newly added node instance and an existing node instance; and
creating and running, by the cloud platform, the newly added node instance according to information of the node that needs to be elastic in the cloud service archive and the connection relationship.

2. The method according to claim 1, wherein the elastic method identifier of the service is full connection elastics or partial connection elastics, wherein
the full connection elastics refers to that a scaled-out new node instance establishes, according to the service topology diagram, a connection relationship with all node instances corresponding to a node template having a connection relationship with a node template corresponding to the new node instance; and
the partial connection elastics refers to that a scaled-out new node instance establishes, according to the service topology diagram, a connection relationship with some of node instances corresponding to a node template having a connection relationship with the node template corresponding to the new node instance.

3. The method according to claim 2, wherein when the elastic method identifier of the service is the partial elastic connection, if all nodes of the service are scaled out, the determining a connection relationship that needs to be established is: determining that only a connection between the newly added node instances is to be established.

4. The method according to claim 2, wherein when the elastic method identifier of the service is the partial elastic connection, if some of nodes of the service are scaled out, the determining a connection relationship that needs to be established comprises: determining to establish a connection between the newly added node instances and establish a connection between some of node instances of the newly added node instances and the existing node instance; and
the creating and running, by the cloud platform, the newly added node instance according to information of the node that needs to be elastic in the cloud service archive and the connection relationship specifically comprises: creating, by the cloud platform, the newly added node instance according to the information of the node that needs to be elastic in the cloud service archive, and establishing the connections between the newly added node instances according to the determined connection relationship that needs to be established; and establishing, based on the service topology, diagram a connection between the newly added node instances as a whole and the existing node instance.

5. The method according to any one of claims 1 to 4, wherein the information of the node that needs to be elastic is node template information of the node that needs to be elastic in the cloud service archive, and the elastic event comprises that a quantity of connections of the service exceeds a preset threshold or a connection response time of the service is greater than a preset threshold.

6. The method according to any one of claims 1 to 4, wherein an elastic services Elastic Services element is added to a service template in the cloud service archive, and the elastic services element comprises an elastic event Trigger Event field and an elastic method Elastic Method field, wherein the elastic event field is used to describe an event that triggers elastics; and
the detecting, by a cloud platform, an elastic event that occurs in running of a service specifically comprises: detecting, by the cloud platform according to the elastic event field in the service template, the elastic event that occurs in the running of the service.

7. The method according to claim 6, wherein the elastic services element further comprises an elastic identifier Elastic ID and an elastic nodes Elastic Nodes field, wherein the Elastic ID defines the elastic identifier and is used to distinguish a different elastic operation; and the Elastic Nodes field defines the elastic nodes and is used to describe an identifier of the node template corresponding to the new node instance that needs to be elastic.

8. A cloud computing server, configured to execute a service-based elastic method in a cloud environment, wherein the cloud computing server comprises a parsing and maintenance module and a control module, wherein
the control module is configured to: detect an elastic event that occurs in running of a service, and report the detected elastic event to the parsing and maintenance module;
the parsing and maintenance module is configured to: receive the elastic event reported by the control module; determine an identifier of a node that needs to be elastic and corresponds to the elastic event; and determine, according to the identifier of the node that needs to be elastic, a service topology diagram of the service, and an elastic method identifier of the service in a cloud service archive, a connection relationship that needs to be established, wherein the connection relationship comprises a connection relationship between newly added node instances and a connection relationship between a newly added node instance and an existing node instance; and
the control module is further configured to: execute an elastic operation according to information of the node that needs to be elastic in the cloud service archive and the connection relationship that is determined by the parsing and maintenance module, and create and run the newly added node instance.

9. The cloud computing server according to claim 8, wherein the elastic method identifier of the service is full connection elastics or partial connection elastics, wherein the full connection elastics refers to that a scaled-out new node instance establishes, according to the service topology diagram, a connection relationship with all node instances corresponding to a node template having a connection relationship with a node template corresponding to the new node instance; and the partial connection elastics refers to that the scaled-out new node instance establishes, according to the service topology diagram, a connection relationship with some of node instances corresponding to a node template having a connection relationship with the node template corresponding to the new node instance.

10. The cloud computing server according to claim 9, wherein when the elastic method identifier of the service is the partial elastic connection, if all nodes of the service are scaled out, the parsing and maintenance module is further configured to: determine that only a connection between the newly added node instances needs to be established, and instruct the control module to create and run the newly added node instance according to the information of the node that needs to be elastic in the cloud service archive and the connection relationship.

11. The cloud computing server according to claim 9, wherein when the elastic method identifier of the service is the partial elastic connection, if some of the nodes of the service are scaled out, the parsing and maintenance module is further configured to: determine to establish a connection between the newly added node instances; establish a connection between some of node instances of the newly added node instances and the existing node instance; instruct the control module to create the newly added node instance according to the information of the node that needs to be elastic in the cloud service archive; first establish connections between the newly added node instances according to the determined connection relationship; and then establish, based on the service topology diagram, a connection between the newly added node instances as a whole and the existing node instance.

12. The cloud computing server according to any one of claims 8 to 11, wherein the information of the node that needs to be elastic is node template information of the node that needs to be elastic in the cloud service archive, and the elastic event comprises that a quantity of connections of the service exceeds a preset threshold or a connection response time of the service is greater than a preset threshold.
